# EUROPEAN PATENT SPECIFICATION

(11) **EP 2 955 839 B1**
(45) Date of publication and mention of the grant of the patent: **02.08.2017**
(21) Application number: 13874479.2
(22) Date of filing: 18.12.2013
(51) Int. Cl.: H02P 6/08, H02M 7/48

(54) **POWER CONSUMPTION REDUCTION DEVICE**
VORRICHTUNG ZUR VERRINGERUNG DES ENERGIEVERBRAUCHS
DISPOSITIF DE RÉDUCTION DE LA CONSOMMATION D'ÉNERGIE

(30) Priority: 08.02.2013 JP 2013023462
(43) Date of publication of application: 16.12.2015
(73) Proprietor: Daikin Industries, Ltd., Osaka-shi, Osaka 530-8323 (JP)
(72) Inventor: SATO, Toshiaki, Osaka-shi Osaka 530-8323 (JP)
(74) Representative: Hoffmann Eitle
(86) International application number: PCT/JP2013/083897
(87) International publication number: WO 2014/122860

(56) References cited:
- JP-A- 2001 231 290
- JP-A- 2002 081 712
- JP-A- 2007 225 138
- JP-A- 2009 148 028
- JP-A- 2012 125 018
- US-A1- 2011 026 280

## Description

### TECHNICAL FIELD

The present invention relates to an apparatus which reduces power consumption.

### BACKGROUND ART

There is conventionally known, among apparatuses where a load such as a motor is driven by an inverter and the like, an apparatus which detects so-called voltage characteristics information such as the phase, zero crossing point, polarity, and the like of a voltage which is applied and performs control and the like according to the detection results. For example, patent document 1, Japanese Laid-open Patent Publication No. 2012-125018, discloses a direct current voltage converting apparatus which, when converting an alternating current voltage, which is output from an alternating current power source, to a direct current voltage, detects the polarity of the alternating current voltage using a voltage polarity detecting section and suppresses noise by switching a switch according to the detection results.

Further, in US 2011/0026280 A1 describes a power conversion apparatus. The power conversion apparatus includes a converter circuit and an inverter circuit. A current sensor detects input current of the inverter circuit, and a voltage sensor detects input voltage of the inverter circuit. A power value calculator section in an inverter macro-computer obtains a power value based on the input current and the input voltage. The inverter macro-computer and the control macro-computer perform a ROOP control of reducing the output of the inverter circuit to make the power value smaller than a predetermined power value. **SUMMARY OF THE INVENTION**

### <Technical Problem>

In the apparatuses as described above, there is an apparatus which is always supplied current from the alternating current power source and always consumes electric power. For example, in the direct current voltage converting apparatus which is described in patent document 1, it is assumed that electric power is consumed due to current flowing through the voltage polarity detecting section in a case where the load is not in a state of being operated. In this case, an increase in power consumption is a concern.

Therefore, the problem of the present invention is to propose an apparatus which is able to reduce power consumption.

### <Solution to Problem>

A power consumption reducing apparatus according to a first aspect of the present invention as outlined in claim 1 is provided with a voltage characteristics detecting section, a drive signal generating section, a switch section, and a switch control section. The voltage characteristics detecting section is electrically connected with a power source and detects the characteristics of a voltage which is applied from the power source due to current flowing through inside of the voltage characteristics detecting section. The drive signal generating section generates a drive signal for driving an actuator based on the detection results from the voltage characteristics detecting section. The switch section is connected in series with the voltage characteristics detecting section between the power source and the voltage characteristics detecting section and is configured and arranged to be able to cut off the flow of current through the inside of the voltage characteristics detecting section. The switch control section controls switching of the switch section. The switch control section switches the switch section so that current flows through the inside of the voltage characteristics detecting section during a driving mode where the actuator is being driven and so that current does not flow through the inside of the voltage characteristics detecting section during a standby mode where driving of the actuator is stopped.

In the power consumption reducing apparatus according to the first aspect of the present invention, the switch control section switches the switch section so that current flows through the inside of the voltage characteristics detecting section during the driving mode where the actuator is being driven and so that current does not flow through the inside of the voltage characteristics detecting section during a standby mode where driving of the actuator is stopped. Due to this, current flows through the inside of the voltage characteristics detecting section during the driving mode and current no longer flows through the inside of the voltage characteristics detecting section during the standby mode. As a result, power consumption in the voltage characteristics detecting section is reduced during the standby mode. Accordingly, it is possible to reduce power consumption.

A power consumption reducing apparatus according to a second aspect of the present invention, as outlined in claim 2, is provided with a voltage phase detecting section, a power factor improvement switch control section, a switch section, and a switch control section. The voltage phase detecting section is electrically connected with a power source and detects the zero crossing point of a voltage which is supplied from the power source. The power factor improvement switch control section is configured and arranged to short curcuit a power factor improvement switch after a predetermined time period from the zero crossing point and to open the power factor improvement switch after a predetermined time period after the short curcuit thereof. The switch section is connected in series with the voltage phase detecting section between the power source and the voltage phase detecting section and is configured to cut off the flow of current through the inside of the voltage phase detecting section. The switch control section controls the switching of the switch section. The switch control section switches the switch section so that current flows through the inside of the voltage phase detecting section when voltage phase detection results are necessary in the power factor improvement switch control section, in a case where the load is in operation and so that current does not flow through the inside of the voltage phase detecting section when voltage phase detection results are not necessary in the power factor improvement switch control section in a case where the load is not in operation.

In the power consumption reducing apparatus according to the second aspect of the present invention, the switch control section switches the switch section so that current flows through the inside of the voltage phase detecting section when voltage phase detection results are necessary in the detection results utilizing section and so that current does not flow through the inside of the voltage phase detecting section when voltage phase detection results are not necessary in the detection results utilizing section. Due to this, current flows through the inside of the voltage phase detecting section when voltage phase detection results are necessary and current no longer flows through the inside of the voltage phase detecting section when voltage phase detection results are not necessary. As a result, power consumption in the voltage phase detecting section is reduced when voltage phase detection results are not necessary. Accordingly, it is possible to reduce power consumption.

A power consumption reducing apparatus according to a third aspect of the present invention is the power consumption reducing apparatus according to the first aspect where the switch control section switches the switch section so that the flow of current through the inside of the voltage characteristics detecting section is cut off when a predetermined time period elapses since driving of the actuator is stopped.

In the power consumption reducing apparatus according to the third aspect of the present invention, the switch control section switches the switch section so that the flow of current through the inside of the voltage characteristics detecting section is cut off when a predetermined time period elapses since driving of the actuator is stopped. Due to this, the flow of current through the inside of the voltage characteristics detecting section is cut off in a case where it is certain that the flow of current may be cut off. As a result, it is possible to realize stable control of switching of the switch section.

A power consumption reducing apparatus according to a fourth aspect of the present invention is the power consumption reducing apparatus according to the first aspect or the third aspect is further provided with an integral control section (60). The integral control section integrally controls a plurality of devices included in an air conditioner. The integral control section includes the switch control section.

In the power consumption reducing apparatus according to a fourth aspect, the actuator is a motor which is at least one drive source for the plurality of devices which are included in the air conditioner. The drive signal generating section includes a determining section and an output section. The determining section determines the drive signal utilizing the detection results from the voltage characteristics detecting section. The output section generates the drive signal which is determined by the determining section and outputs the drive signal to the actuator.

In the power consumption reducing apparatus according to the fourth aspect of the present invention, the actuator is the motor which is at least one drive source for the plurality of devices which are included in the air conditioner. Due to this, it is possible to reduce power consumption in the air conditioner.

A power consumption reducing apparatus according to a fifth aspect of the present invention is the power consumption reducing apparatus according to any of the first aspect, third aspect, or fourth aspect where the voltage characteristics detecting section detects the phase of the voltage which is applied from the power source.

In the power consumption reducing apparatus according to the fifth aspect of the present invention, the voltage characteristics detecting section detects the phase of the voltage which is applied from the power source. Due to this, power consumption in the voltage characteristics detecting section is reduced when detecting of the phase of the power source voltage is not necessary.

A power consumption reducing apparatus according to a sixth aspect of the present invention is the power consumption reducing apparatus according to any of the first aspect, third aspect, or fourth aspect where the voltage characteristics detecting section detects the polarity of the voltage which is applied from the power source.

In the power consumption reducing apparatus according to the sixth aspect of the present invention, the voltage characteristics detecting section detects the polarity of the voltage which is applied from the power source. Due to this, power consumption in the voltage characteristics detecting section is reduced when detecting of the polarity of the power source voltage is not necessary.

A power consumption reducing apparatus according to a seventh aspect of the present invention is the power consumption reducing apparatus according to any of the first aspect, third aspect, or fourth aspect where the voltage characteristics detecting section detects the zero crossing point of the voltage which is applied from the power source.

In the power consumption reducing apparatus according to the seventh aspect of the present invention, the voltage characteristics detecting section detects the zero crossing point of the voltage which is applied from the power source. Due to this, power consumption in the voltage characteristics detecting section is reduced when detecting of the zero crossing point of the power source voltage is not necessary.

### <Advantageous Effects of the Invention>

In the power consumption reducing apparatus according to the first aspect of the present invention, power consumption in the voltage characteristics detecting section is reduced during the standby mode. Accordingly, it is possible to reduce power consumption.

In the power consumption reducing apparatus according to the second aspect of the present invention, power consumption in the voltage characteristics detecting section is reduced when detecting of the voltage characteristics is not necessary. Accordingly, it is possible to reduce power consumption.

In the power consumption reducing apparatus according to the third aspect of the present invention, it is possible to realize stable control of switching of the switch section.

In the power consumption reducing apparatus according to the fourth aspect of the present invention, it is possible to reduce power consumption in the air conditioner during the standby mode where driving of the motor is stopped.

In the power consumption reducing apparatus according to the fifth aspect of the present invention, power consumption in the voltage characteristics detecting section is reduced when detecting of the phase of the voltage is not necessary.

In the power consumption reducing apparatus according to the sixth aspect of the present invention, power consumption in the voltage characteristics detecting section is reduced when detecting of the polarity of the voltage is not necessary.

In the power consumption reducing apparatus according to the seventh aspect of the present invention, power consumption in the voltage characteristics detecting section is reduced when detecting of the zero crossing point of the voltage is not necessary.

### BRIEF DESCRIPTION OF THE DRAWINGS

[Fig. 1] Fig. 1 is an outline configuration diagram of a motor driving apparatus according to an embodiment of the present invention.
[Fig. 2] Fig. 2 is an outline configuration diagram of an air conditioner.
[Fig. 3] Fig. 3 is an outline configuration diagram of a voltage phase detecting section.
[Fig. 4] Fig. 4 is a schematic diagram illustrating the relationship between an alternating current voltage and a pulse signal which is output from the voltage phase detecting section.
[Fig. 5] Fig. 5 is a timing chart illustrating changes in the state of each section according to the mode of the air conditioner.
[Fig. 6] Fig. 6 is a schematic diagram illustrating the relationship between an alternating current voltage and a pulse signal which is output from the voltage phase detecting section.
[Fig. 7] Fig. 7 is an outline configuration diagram of a motor driving apparatus according to modified example 1G.
[Fig. 8] Fig. 8 is a schematic diagram illustrating the relationship between a direct current voltage and a pulse signal which is output from the voltage phase detecting section.
[Fig. 9] Fig. 9 is an outline configuration diagram of a motor driving apparatus according to modified example 1H.
[Fig. 10] Fig. 10 is an outline configuration diagram of a direct current power source apparatus according to modified example 1 M.

### DESCRIPTION OF EMBODIMENTS

An embodiment of the present invention will be described below with reference to the drawings. It should be noted that the following embodiment is a specific example of the present invention, is not intended to limit the technical scope of the present invention, and can be appropriately changed without departing from the spirit of the invention.

### (1) Outline and Configuration of Air Conditioner 10

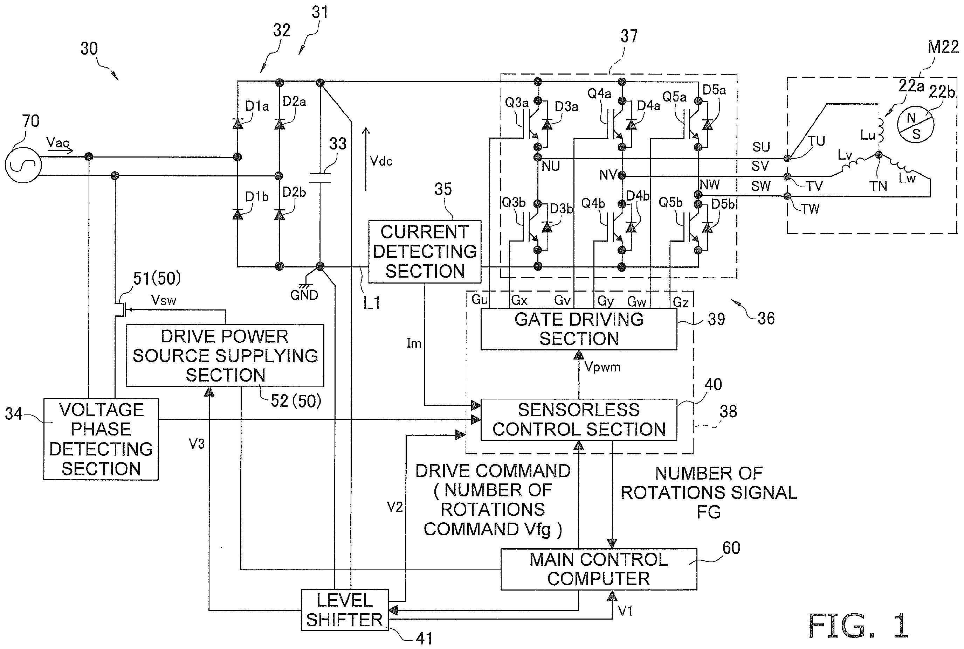

Fig. 1 is an outline configuration diagram of a motor driving apparatus 30. An indoor fan motor M22 which is an actuator and the motor driving apparatus 30 according to the present embodiment for controlling driving of the indoor fan motor M22 are illustrated in Fig. 1.

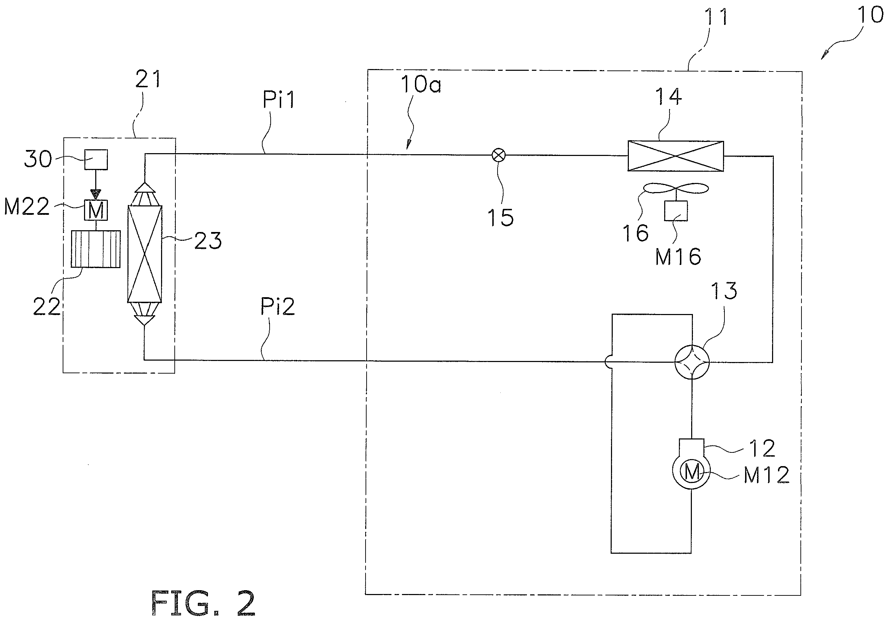

The indoor fan motor M22 is used as the drive source for an indoor fan 22 that is one of devices included in an indoor unit 21 of an air conditioner 10 (refer to Fig. 2). The indoor fan motor M22 is an alternating current motor which is driven by being applied an alternating current voltage.

The motor driving apparatus 30 is mounted inside the indoor unit 21. The motor driving apparatus 30 is an apparatus where vector control (field orientated control) of the indoor fan motor M22 is carried out based on a motor current Im which flows through the indoor fan motor M22.

The configuration of the air conditioner 10 will be described below with reference to Fig. 2. Fig. 2 is an outline configuration diagram of the air conditioner 10.

The air conditioner 10 is a separator type of air conditioner which mainly has an outdoor unit 11 which is installed outdoors and the indoor unit 21 which is installed indoors on the ceiling or a wall surface. The units 11 and 21 are connected using refrigerant pipes Pi1 and Pi2 and configure a vapor compression type of refrigerant circuit 10a in the air conditioner 10. Cooling operation, heating operation, and the like are possible in the air conditioner 10. The air conditioner 10 has control modes which includes a driving mode and a stopping mode. The driving mode is selected in a case where the air conditioner 10 is being driven. The stopping mode is selected in a case where driving of the air conditioner is stopped.

### (1-1) Outdoor Unit 11

The outdoor unit 11 mainly has a compressor 12, a four way switching valve 13, an outdoor heat exchanger 14, an expansion valve 15, and an outdoor fan 16.

The compressor 12 is a mechanism which suctions in and compresses low-pressure gas refrigerant and discharges high-pressure gas refrigerant after compression. Here, a tightly sealed compressor is adopted as the compressor 12 such that a positive displacement compression element (which is not shown in the diagrams) such as a rotary type or a scrolling type, which is accommodated inside a casing (which is not shown in the diagrams), is driven with a compressor motor M12 which is accommodated in the same casing as the drive source, and due to this, it is possible to control the capacity of the compressor 12. That is, the compressor 12 is a compressor which is a type where the compressor itself varies its capacity. The compressor motor M12 is a three-phase brushless DC motor and has a stator, a rotor, and the like.

The four way switching valve 13 is a valve for switching the direction of the flow of refrigerant when switching between cooling operation and heating operation. During cooling operation, the four way switching valve 13 connects the discharge side of the compressor 12 and the gas side of the outdoor heat exchanger 14 and connects the gas side of an indoor heat exchanger 23 which will be described later and the suction side of the compressor 12. In addition, during heating operation, the four way switching valve 13 connects the discharge side of the compressor 12 and the gas side of the indoor heat exchanger 23 and connects the gas side of the outdoor heat exchanger 14 and the suction side of the compressor 12. That is, the connection state which is adopted by the four way switching valve 13 changes according to the type of driving of the air conditioner 10.

The outdoor heat exchanger 14 is a heat exchanger which functions as a condenser for refrigerant during cooling operation and which functions as an evaporator for refrigerant during heating operation. The liquid side of the outdoor heat exchanger 14 is connected with the expansion valve 15 and the gas side of the outdoor heat exchanger 14 is connected with the four way switching valve 13.

The expansion valve 15 is configured using an electric expansion valve. The expansion valve 15 reduces the pressure of high-pressure liquid refrigerant where heat is released in the outdoor heat exchanger 14 during cooling operation before the refrigerant is sent to the indoor heat exchanger 23. In addition, the expansion valve 15 reduces the pressure of high-pressure liquid refrigerant where heat is released in the indoor heat exchanger 23 during heating operation before the refrigerant is sent to the outdoor heat exchanger 14.

The outdoor fan 16 supplies outdoor air to the outdoor heat exchanger 14 by suctioning outdoor air into the outdoor unit 11 and exhausts the air to the outside of the outdoor unit 11. For example, a propeller fan is adopted as the outdoor fan 16 and is rotationally driven with an outdoor fan motor M16 as the drive source. The outdoor fan motor M16 is, for example, a three-phase brushless motor which has a stator and a rotor.

The outdoor unit 11 has various sensors such as a refrigerant pressure sensor, a refrigerant temperature detecting sensor, and an outside temperature detecting sensor, an outdoor unit control section (which is not shown in the diagrams) which controls each type of device inside the outdoor unit 11, and the like.

### (1-2) Indoor Unit 21

The indoor unit 21 mainly has the indoor fan 22 and the indoor heat exchanger 23. The indoor fan 22 and the indoor heat exchanger 23 are installed at inside of a casing of the indoor unit 21.

The indoor fan 22 is a blower which takes in indoor air into the inside of the casing via an intake opening (which is not shown in the diagrams) and blows out the air from the inside of the casing to the indoors via a blowout opening (which is not shown in the diagrams) after heat exchange is carried out in the indoor heat exchanger 23. The indoor fan 22 is configure by, for example, a cross flow fan and is rotationally driven with the indoor fan motor M22 as the drive source. The indoor fan motor M22 is controlled to be driven by the motor driving apparatus 30.

Here, the indoor fan motor M22 will be described in detail with reference to Fig. 1. The indoor fan motor M22 is configured by a three-phase brushless DC motor in the same manner as the other motors M12 and M16 and has a stator 22a and a rotor 22b.

The stator 22a includes drive coils Lu, Lv, and Lw for a U phase, a V phase, and a W phase with a star connection. One end of each of the drive coils Lu, Lv, and Lw is connected with drive coil terminals TU, TV, and TW for each of the wirings of the U phase, the V phase, and the W phase which each extend from an inverter 37 (which will be described later). The other end of each of the drive coils Lu, Lv, and Lw are connected with each other as a terminal TN. The three phases of the drive coils Lu, Lv, and Lw generate induction voltages according to the rotation speed and position of the rotor 22b due to the rotor 22b being rotated.

The rotor 22b includes permanent magnets with a plurality of poles which consist of an N pole and an S pole and is rotated with regard to the stator 22a around a rotation shaft as the center. The rotation torque of the rotor 22b is transferred to the indoor fan 22 via an output shaft (which is not shown in the diagrams) which has the same shaft center as the rotation shaft. When focusing on the configuration of the rotor, the type of motor can be roughly divided into a surface permanent magnet motor (which is described below as an SPM motor) and an interior permanent magnet motor (which is described below as an IPM motor). In the following description, a case is assumed where the brushless DC motor which is used as the indoor fan motor M22 is mainly a typical SPM motor.

The indoor heat exchanger 23 is a heat exchanger which functions as an evaporator for refrigerant during cooling operation and which functions as a condenser for refrigerant during heating operation. The indoor heat exchanger 23 is connected with each of the refrigerant pipes Pi1 and Pi2 and is configured by, for example, a plurality of fins and a plurality of heat transfer pipes which are inserted in the fins. The indoor heat exchanger 23 performs heat exchange between air from indoors which is suctioned into the inside of the casing and refrigerant which flows through the transfer pipes.

Other than this, the indoor unit 21 has a horizontal flap which is provided at a blowout opening, various sensors such as a suction air temperature detecting sensor, an indoor unit control section which controls each type of device inside the indoor unit 21, and the like although these are not shown in the diagrams.

### (2) Configuration of Motor Driving Apparatus 30

The configuration of the motor driving apparatus 30 will be described below with reference to Fig. 1. The motor driving apparatus 30 is mounted on, for example, one print substrate and is connected with the indoor fan motor M22. Electric power is supplied to the motor driving apparatus 30 from a commercial power source 70. Here, the motor driving apparatus 30 and the commercial power source 70 are connected using, for example, a power source cord via a power plug in a house.

The motor driving apparatus 30 is mainly configured from a direct current voltage generating section 31, a voltage phase detecting section 34, a current detecting section 35, a drive voltage generating section 36, a level shifter 41, a switching section 50, and a main control computer 60.

### (2-1) Direct Current Voltage Generating Section 31

The direct current voltage generating section 31 is connected in series with the commercial power source 70 and converts an alternating current voltage Vac which is input from the commercial power source 70 into a direct current voltage Vdc. The direct current voltage generating section 31 mainly has a rectifying section 32 and a smoothing capacitor 33.

The rectifying section 32 is configured in a bridge state using four diodes D1a, D1b, D2a, and D2b. In detail, the diodes D1a and D1b, and D2a and D2b are connected with each other in series. Each of the cathode terminals of the diodes D1a and D2a are connected with the plus side terminal of the smoothing capacitor 33 and function as positive side output terminals of the rectifying section 32.

Each of the anode terminals of the diodes D1b and D2b are connected with the minus side terminal of the smoothing capacitor 33 and function as negative side output terminals of the rectifying section 32. The connection point of the diodes D1a and D1b and the connection point of the diodes D2a and D2b are each connected with the commercial power source 70. That is, the connection point of the diodes D1a and D1b and the connection point of the diodes D2a and D2b carry out the role of input unit for the rectifying section 32.

The rectifying section 32 rectifies the alternating current voltage Vac which is input from the commercial power source 70 via a switch 51 which will be described later and applies the voltage which is rectified to the smoothing capacitor 33.

One end of the smoothing capacitor 33 is connected with the positive side output terminal of the rectifying section 32 and the other end of the smoothing capacitor 33 is connected with the negative side output terminal of the rectifying section 32. The smoothing capacitor 33 smooths the voltage which is rectified by the rectifying section 32. The voltage which is smoothed is the direct current voltage Vdc with ripples in a case where the capacity of the smoothing capacitor is relatively small. The direct current voltage Vdc is applied to the inverter 37 which is connected with a latter stage (that is the output side) of the smoothing capacitor 33. The other end side of the capacitor, is a reference potential (which is abbreviated as GND).

For example, a capacitor such as an electrolytic capacitor, a ceramic capacitor, a tantalum capacitor, and the like, but a case is adopted as the smoothing capacitor 33. In the present embodiment, an electrolytic capacitor is adopted as the smoothing capacitor 33.

### (2-2) Voltage Phase Detecting Section 34

The voltage phase detecting section 34 is electrically connected with the commercial power source 70 via the switching section 50 which will be described later. In detail, the voltage phase detecting section 34 is connected in parallel with the rectifying section 32 between the commercial power source 70 and the direct current voltage generating section 31. In addition, the voltage phase detecting section 34 is connected with a sensorless control section 40 which will be described later and performs sending and receiving of signals with each other.

The voltage phase detecting section 34 detects the phase of the alternating current voltage Vac by current which accompanies the alternating current voltage Vac flowing through the inside of the voltage phase detecting section 34. In more detail, the voltage phase detecting section 34 detects the phase of the alternating current voltage Vac when the alternating current voltage Vac which is applied from the commercial power source 70 reaches a predetermined voltage. The voltage phase detecting section 34 outputs a pulse signal which has a pulse width according to the phase which is detected to the sensorless control section 40. Here, since the voltage phase detecting section 34 detects the phase of the alternating current voltage Vac due to current which accompanies the alternating current voltage Vac flowing through the inside of the voltage phase detecting section 34, the commercial power source 70 is also referred to as a "current supplying section" for supplying current to the inside of the voltage phase detecting section 34.

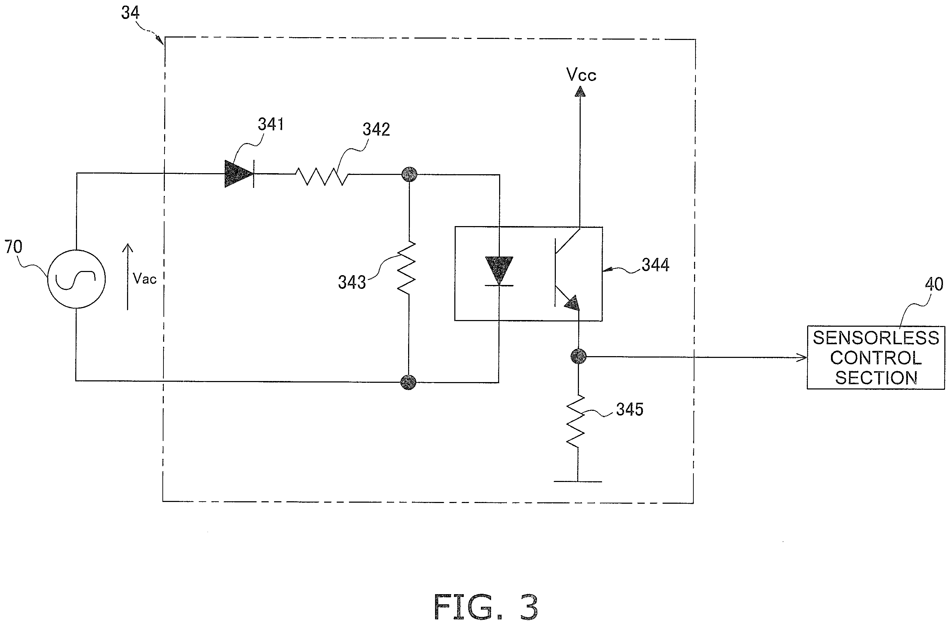

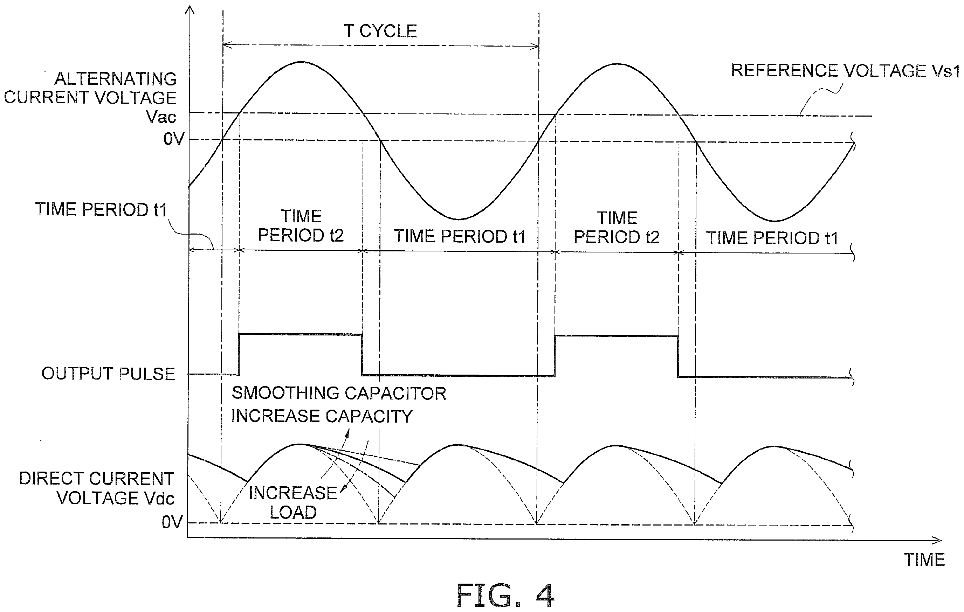

Fig. 3 is an outline configuration diagram of the voltage phase detecting section 34. The voltage phase detecting section 34 is configured from a diode 341, a first resistor 342, a second resistor 343, a photo coupler 344, and a third resistor 345. The primary side of the photo coupler 344 is connected with the commercial power source 70 in parallel with the second resistor 343 via the diode 341 and the first resistor 342. The alternating current voltage Vac is divided between the first resistor 342 and the second resistor 343 so that the photo coupler 344 is ON only during a period when the alternating current voltage Vac exceeds a reference voltage Vs1 (refer to Fig. 4) which will be described later.

The emitter of an output transistor is pulled down with the third resistor 345 and the secondary side of the photo coupler 344 is connected with the input port of the sensorless control section 40. The collector of an output transistor is pulled up with a control voltage Vcc. Here, this configuration of the voltage phase detecting section 34 is merely one example and appropriate modifications are possible.

From here, the relationship between the alternating current voltage Vac and a pulse signal which is output from the voltage phase detecting section 34 will be described. Fig. 4 is a schematic diagram illustrating the relationship between the alternating current voltage Vac and a pulse signal which is output from the voltage phase detecting section 34. The power source frequency of the alternating current voltage Vac is maintained to be constant and a cycle T of the alternating current voltage Vac is constant.

The reference voltage Vs1 is set in the voltage phase detecting section 34 as a reference in detecting the phase of the alternating current voltage Vac. Here, the reference voltage Vs1 is set to an appropriate voltage which is not 0V in consideration of the characteristics of the photo coupler 344. Then, the voltage phase detecting section 34 is configured so that the secondary side of the photo coupler 344 is not ON and the output level of the pulse signal is LOW (GND) during a time period t1 which is a period where the alternating current voltage Vac is lower than the reference voltage Vs1. On the other hand, the secondary side of the photo coupler 344 is ON during a time period t2 which is a period where the alternating current voltage Vac is higher than the reference voltage Vs1 and the voltage phase detecting section 34 is such that HIGH (Vcc) is output to the sensorless control section 40 as the output level of the pulse signal. That is, the time period t2 is a time period from the rise to the fall of the pulse signal which is output from the voltage phase detecting section 34 and is equivalent to the pulse width of the pulse signal.

Here, the time period t1 becomes longer as the alternating current voltage Vac is lower and the time period t2 becomes longer as the alternating current voltage Vac is higher. That is, the pulse width of the pulse signal which is output from the voltage phase detecting section 34 depends on the size of the alternating current voltage Vac.

Here, the voltage phase detecting section 34 may be configured so that the pulse signal which is output from the voltage phase detecting section 34 is LOW when the alternating current voltage Vac is higher than the reference voltage Vs1 (that is, in the time period t2) and the pulse signal which is output from the voltage phase detecting section 34 is HIGH when the alternating current voltage Vac is lower than the reference voltage Vs1 (that is, in the time period t1). In addition, the reference voltage Vs1 need not be a positive voltage and may be set to a negative voltage.

### (2-3) Current Detecting Section 35

The current detecting section 35 is connected with the negative side output terminal side of the smoothing capacitor 33 between the smoothing capacitor 33 and the inverter 37 of the drive voltage generating section 36. The current detecting section 35 detects the motor current Im which flows through the indoor fan motor M22 after the activation of the indoor fan motor M22. The current detecting section 35 is configured using, for example, a shunt resistor and an amplifying circuit (which are not shown in the diagrams).

The shunt resistor is connected in series on GND wiring L1 which is connected with the negative side output terminal of the smoothing capacitor 33. The amplifying circuit is a circuit which consists of an operational amplifier or the like for amplifying the voltage at both ends of the shunt resistor to a predetermined magnification. The two inputs of the amplifying circuit are connected with both ends of the shunt resistor. The output of the amplifying circuit is connected with the sensorless control section 40.

Since current which flows through the indoor fan motor M22 (that is, the motor current Im) flows through the GND wiring L1, it is possible for the current detecting section 35 to detect the motor current Im by detecting the voltage, which accompanies the motor current Im, at both ends of the shunt resistor according to the state of conductance.

### (2-4) Drive Voltage Generating Section 36

The drive voltage generating section 36 generates drive voltages SU, SV, and SW (which are equivalent to drive signals), which are a three phase alternating current voltage for driving the indoor fan motor M22, based on the detection results from the voltage phase detecting section 34 and the current detecting section 35 and the like. The drive voltage generating section 36 outputs the drive voltages SU, SV, and SW which are generated to the indoor fan motor M22. In particular, the drive voltage generating section 36 according to the present embodiment generates the drive voltages SU, SV, and SW based on a rotor position sensorless method using an estimate value for the direct current voltage Vdc which is determined using the detected voltage phase or the like.

The drive voltage generating section 36 is configured by the inverter 37 (which is equivalent to an output section) and an indoor fan control section 38 (which is equivalent to a determining section) as shown in Fig. 1.

### (2-4-1) Inverter 37

The inverter 37 is connected with the output side of the smoothing capacitor 33. The inverter 37 includes a plurality of insulated gate bipolar transistors (simply referred to below as transistors) Q3a, Q3b, Q4a, Q4b, Q5a, and Q5b, and a plurality of circulation diodes D3a, D3b, D4a, D4b, D5a, and D5b as shown in Fig. 1.

The transistors Q3a and Q3b are connected with each other in series. The transistors Q4a and Q4b are connected with each other in series. The transistors Q5a and Q5b are connected with each other in series. Each of the diodes D3a to D5b are connected in an antiparallel manner with regard to each of the transistors Q3a to Q5b by the collector terminals of the transistors being connected with the cathode terminals of the diodes and the emitter terminals of the transistors being connected with the anode terminals of the diodes.

The inverter 37 is applied the direct current voltage Vdc from the smoothing capacitor 33. Then, in the inverter 37 generates the drive voltages SU, SV, and SW (which are equivalent to drive signals) which have a desired duty by ON and OFF of each of the transistors Q3a to Q5b being performed at timings which are the commands from a gate driving section 39 (which will be described later). The drive voltages SU, SV, and SW are output to the indoor fan motor M22 from the respective connection points NU, NV, and NW with each of the transistors Q3a and Q3b, Q4a and Q4b, and Q5a and Q5b. That is, the inverter 37 supplies power to the indoor fan motor M22.

### (2-4-2) Indoor Fan Control Section 38

The indoor fan control section 38 is a computer which consists of a RAM, a ROM, and a CPU and is connected with the inverter 37. The indoor fan control section 38 is a computer for controlling driving which is dedicated to the indoor fan motor M22. The indoor fan control section 38 determines the drive voltages SU, SV, and SW, which the inverter 37 is to output to the indoor fan motor M22, using the pulse signals which are output from the voltage phase detecting section 34 and the like.

The indoor fan control section 38 mainly has the gate driving section 39 and the sensorless control section 40 as shown in Fig. 1.

### (2-4-2-1) Gate Driving Section 39

The gate driving section 39 changes the ON and OFF states of each of the transistors Q3a to Q5b in the inverter 37 based on a voltage command value Vpwm from the sensorless control section 40. In detail, the gate driving section 39 generates gate control voltages Gu, Gx, Gv, Gy, Gw, and Gz, which are applied to the gates of each of the transistors Q3a to Q5b, so that the drive voltages SU, SV, and SW, which have a duty which is determined using the sensorless control section 40, are output from the inverter 37 to the indoor fan motor M22. The gate control voltages Gu, Gx, Gv, Gy, Gw, and Gz which are generated are applied to the respective gate terminals of the transistors Q3a to Q5b.

Here, the voltage command value Vpwm is a command value for specifying parameters which relate to the drive voltages SU, SV, and SW. The Voltage command value Vpwm is determined by being linked with the value of the motor current Im detected by the current detecting section 35, the estimate value of the direct current voltage Vdc estimated by the sensorless control section 40, and the like, and is output from the sensorless control section 40. As the parameters which relate to the drive voltages SU, SV, and SW, there are the examples of the duties, the frequencies, the voltage values, and the like of the respective drive voltages SU, SV, and SW. In the present embodiment, the voltage command value Vpwm is a command value for specifying the duties of the drive voltages SU, SV, and SW. That is, PWM control of the indoor fan motor M22 is carried out.

### (2-4-2-2) Sensorless Control Section 40

The sensorless control section 40 is connected with the voltage phase detecting section 34, the current detecting section 35, the gate driving section 39, and the main control computer 60. The sensorless control section 40 is a functional section for carrying out drive control of the indoor fan motor M22 using a sensorless method (in more detail, a rotor position sensorless method).

In detail, the indoor fan motor M22 is firstly activated using a direct current excitation method or a forced driving method. The direct current excitation method is a method where the position of the rotor 22b in the indoor fan motor M22 is temporarily fixed at a predetermined position and driving of the indoor fan motor M22 starts from a state where the rotor 22b is fixed by performing conduction of a direct current with regard to the indoor fan motor M22 immediately before activation. In addition, the forced driving method is a method where the indoor fan motor M22 is forcibly activated by performing forced conduction where the drive voltages SU, SV, and SW which have certain voltage values and frequencies are applied to the indoor fan motor M22 irrespective of the position of the rotor 22b.

Then, the sensorless control section 40 estimates the position of the rotor 22b in the indoor fan motor M22 after activation and estimates the number of rotations of the indoor fan motor M22 based on the position of the rotor 22b which is estimated. The number of rotations of the indoor fan motor M22 which is estimated is input into the main control computer 60 as a number of rotations signal FG.

Furthermore, when a drive command which includes a number of rotations command Vfg is sent from the main control computer 60, the sensorless control section 40 determines the duties of the drive voltage SU, SV, and SW as the voltage command value Vpwm at each of the control timings with the rotor position sensorless method using the drive command, the position of the rotor 22b which is estimated, the number of rotations which is estimated, the voltage value of the direct current voltage Vdc which is estimated, and the detection results from the current detecting section 35.

Here, the voltage value of the direct current voltage Vdc is estimated based on the pulse signal which is output from the voltage phase detecting section 34. In detail, the sensorless control section 40 holds in advance a table, where the corresponding relationship between the pulse width of the pulse signal which is output from the voltage phase detecting section 34 and the voltage value of the direct current voltage Vdc is defined, and estimates the voltage value of the direct current voltage Vdc by referencing the table according to the pulse width which is output. Here, an example of the direct current voltage Vdc which is estimated is shown in Fig. 4. The direct current voltage Vdc has ripples which are synchronized with the power source voltage at double the frequency of the power source voltage, and changes depending on the capacity of the capacitor and the size of the load (current) as shown in Fig. 4. Since the direct current voltage Vdc changes according to the size of the load (current) in this manner, it is possible to more accurately estimate the direct current voltage by using a table which takes current detection value into consideration also being provided.

Here, the rotor position sensorless method is a method with performing of estimating of the position of the rotor 22b, estimating of the number of rotations, PI control with regard to the number of rotations, PI control with regard to the motor current Im, and the like, using various types of parameters which express the characteristics of the indoor fan motor M22, the voltage value of the direct current voltage Vdc, the motor current Im (that is, the detection results from the current detecting section 35), a predetermined numerical model which relates to control of the indoor fan motor M22, and the like. As the various types of parameters which express the characteristics of the indoor fan motor M22, there are the examples of the coil resistance, the inductance component, the induced voltage, the number of poles, and the like of the indoor fan motor M22 which is being used.

### (2-5) Level Shifter 41

The level shifter 41 is connected in parallel with regard to the smoothing capacitor 33 as shown in Fig. 1 and a both end voltage (that is, the direct current voltage Vdc) from the smoothing capacitor 33 is applied to the level shifter 41. The output of the level shifter 41 is connected with the indoor fan control section 38, the main control computer 60, and a drive power source supplying section 52.

The level shifter 41 converts the direct current voltage Vdc which is applied to three predetermined voltages V1, V2, and V3. The level shifter 41 applies the predetermined voltages V1, V2, and V3 after conversion respectively to the indoor fan control section 38, the drive power source supplying section 52, and the main control computer 60 as the power source voltage. That is, the level shifter 41 functions as the power source for the indoor fan control section 38, the drive power source supplying section 52, and the main control computer 60. As one example, the level shifter 41 converts the direct current voltage Vdc to the voltage V1 which is 3V and the voltages V2 and V3 which are 5V with the direct current voltage Vdc as 140V. The voltage V1 which is 3V is the power source voltage which is applied to the main control computer 60. The 5V of voltages V2 and V3 are power source voltages which are applied to the indoor fan control section 38 and the drive power source supplying section 52. Here, the level shifter 41 may further convert the direct current voltage Vdc to a control power source voltage (for example, 15V) for controlling the inverter 37 in the same manner as described above.

### (2-6) Switching Section 50

The switching section 50 is for switching the flow of current to the voltage phase detecting section 34 and is connected in series with the voltage phase detecting section 34 between the commercial power source 70 and the voltage phase detecting section 34 as described above. Due to the switching section 50 being arranged in this manner, it is possible to cut off the supply of power to the voltage phase detecting section 34 in the motor driving apparatus 30. The switching section 50 is mainly configured from the switch 51 and the drive power source supplying section 52.

### (2-6-1) Switch 51

The switch 51 is an electrical component for preventing unnecessary consumption of power in the voltage phase detecting section 34 which has a configuration where current flows if the voltage Vac is applied.

The switch 51 is configured using, for example, a MOSFET (metal-oxide semiconductor field-effect transistor) which is one type of semiconductor switch and carries out the role of a switch which switches between current flowing and not flowing through the voltage phase detecting section 34. The MOSFET is ON due to the potential of the gate terminal with regard to the potential of the source terminal being equal to or more than a threshold. For this reason, it is possible for the switch 51 which is configured using a MOSFET to operate as a switch which switches between ON and OFF due to an appropriate voltage being applied to the gate terminal.

### (2-6-2) Drive Power Source Supplying Section 52

The drive power source supplying section 52 is configured using a plurality of transistors or the like.

The input of the drive power source supplying section 52 is connected with the main control computer 60 and the level shifter 41. In addition, the output of the drive power source supplying section 52 is connected with the gate terminal of the switch 51. The drive power source supplying section 52 is applied with the predetermined power source voltage V3 from the level shifter 41. The drive power source supplying section 52 generates a switch drive power source Vsw for the switch 51 according to a command from the main control computer 60 and outputs the switch drive power source Vsw to the switch 51. That is, the operations of the switch 51 being turned ON and OFF is controlled by the main control computer 60.

In detail, the drive power source supplying section 52 turns the switch 51 ON by supplying the switch drive power source Vsw which is, for example, 5V to the switch 51 so that current flows through the voltage phase detecting section 34. In addition, the drive power source supplying section 52 turns the switch 51 OFF by cutting off the supply of the switch drive power source Vsw to the switch 51 so that current does not flow through the voltage phase detecting section 34.

Here, at which timing is the switch 51 switched from ON to OFF and from OFF to ON is described in "(3) Operations of Switch 51 and Indoor Fan Motor M22".

### (2-7) Main Control Computer 60

The main control computer 60 is a microcomputer which includes a RAM, a ROM, and a CPU. The main control computer 60 is applied with the power source voltage V1 from the level shifter 41. Along with being connected with the indoor fan control section 38, the main control computer 60 is connected with a remote controller, an indoor unit control section, an outdoor unit control section, and the like although these are not shown in the diagrams.

The main control computer 60 integral controls a plurality of devices which are included in the air conditioner 10 (in detail, the compressor 12, the four way switching valve 13, the outdoor fan 16, the indoor fan 22, and the like). For example, the main control computer 60 outputs an activation command for the compressor motor M12 or the outdoor fan motor M16 as a driving start command with regard to the outdoor unit control section in a case where there is a command to start driving from the remote controller.

In addition, the main control computer 60 outputs an activation command for the indoor fan motor M22 with regard to the indoor unit control section in a case where there is a command to start driving from the remote controller. Furthermore, the main control computer 60 performs monitoring of the number of rotations signal FG which indicates the number of rotations of the indoor fan motor M22, and outputs a drive command which includes the number of rotations command Vfg to the sensorless control section 40.

In addition, the main control computer 60 performs control of the switching section 50 by causing the drive power source supplying section 52 to perform supplying and cutting off of the switch drive power source Vsw to the switch 51.

In detail, the main control computer 60 controls so that the switch 51 is ON during the driving mode where the indoor fan motor M22 is driven. Due to this, current flows through the voltage phase detecting section 34 during the driving mode. In addition, the main control computer 60 controls so that the switch 51 is OFF during the stopping mode where the indoor fan motor M22 is not driven. Due to this, current does not flow through the voltage phase detecting section 34.

In this manner, the main control computer 60 switches between the switch 51 being ON or OFF depending on the driving mode or the stopping mode. Due to this, flowing of current through the voltage phase detecting section 34 is restrained during the stopping mode, and power consumption in the motor driving apparatus 30 is reduced by approximately 0.02W to 0.24W compared to a case where current flows through the voltage phase detecting section 34 during the stopping mode. Here, the value of the reduction in the power consumption changes according to the product design specifications and installation environment.

### (3) Operations of Switch 51 and Indoor Fan Motor M22

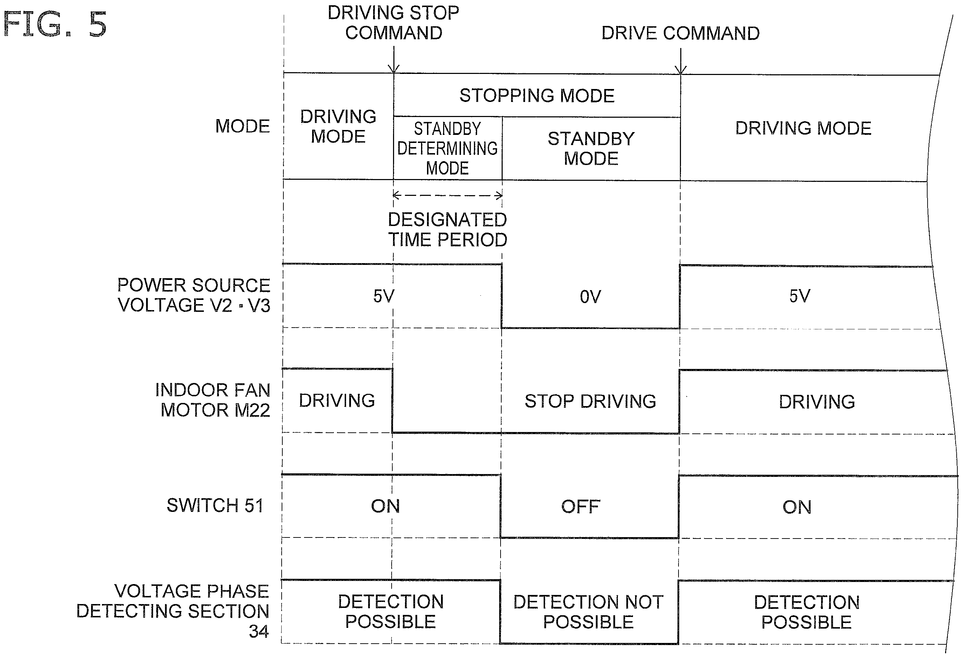

The timing of the switch 51 being switched from ON to OFF, the timing of the switch 51 being switched from OFF to ON, the operations of the indoor fan motor M22, and the like will be described below with reference to Fig. 5. Fig. 5 is a timing chart which represents how the mode which is adopted by the air conditioner 10, the power source voltage V2 which is applied to the indoor fan control section 38, the power source voltage V3 which is applied to the drive power source supplying section 52, the drive state of the indoor fan motor M22, the state which is adopted by the switch 51, and the operations of the voltage phase detecting section 34 change as time elapses.

The air conditioner 10 is in a state of being driven in a case of the "driving mode" which is shown in Fig. 5. In detail, when focusing on the indoor fan motor M22, the power source voltage V2 which is 5V is applied to the indoor fan control section 38 in a case of the "driving mode" and the indoor fan control section 38 is in a state of controlling driving of the indoor fan motor M22. For this reason, the indoor fan motor M22 is driven. Then, the drive power source supplying section 52 supplies the switch drive power source Vsw to the switch 51. The switch 51 is turned ON, a power source voltage is applied from the commercial power source 70 to the voltage phase detecting section 34 via the switch 51, and current flows through the inside of the voltage phase detecting section 34. Due to this, it is possible for the voltage phase detecting section 34 to detect the phase of the alternating current voltage Vac which is necessary in controlling driving of the indoor fan motor M22.

In a case where, for example, there is a driving stop command from a user via the remote controller which is not shown in the diagrams, the mode transits from the "driving mode" to the "stopping mode" and the air conditioner 10 is in a state where driving is stopped. The "stopping mode" has a "standby determining mode" and a "standby mode" as more detailed modes, and the "standby determining mode" is selected while a predetermined time period is elapsing since the driving stop command.

The "standby determining mode" is a mode for determining whether or not to transit to the "standby mode". On the other hand, the "standby mode" is a mode where as much of the driving of each type of device inside the air conditioner 10 as possible is stopped by, for example, cutting off the application of the power source voltages V2 or V3 to the indoor fan control section 38 or the drive power source supplying section 52 from the level shifter 41. That is, the "standby mode" is a mode which conserves the amount of power which is consumed by the air conditioner 10 as much as possible due to a state (the standby state) where only the minimum of devices are operational and which is such that it is possible for each type of device to be immediately activated when the next driving command is received. Determining whether or not to transit from the "standby determining mode" to the "standby mode" is performed by the main control computer 60.

In detail, first, driving of the indoor fan motor M22 is stopped and driving of the indoor unit 21 is stopped at a timing when driving stop command is input and transition from the "driving mode" to the "standby determining mode" as the "stopping mode" is performed. Then, the main control computer 60 performs control so as to switch the switch 51 from ON to OFF and performs control of the level shifter 41 so as to cut off the application of the power source voltages V2 and V3 to the indoor fan control section 38 and the drive power source supplying section 52 at a timing of transiting from the "standby determining mode" to the "standby mode" due to the predetermined time period elapsing since the driving stop command.

Due to this, the indoor fan control section 38 is in a state where the operations for controlling the indoor fan motor M22 is stopped when the predetermined time period elapses since the driving stop command. In addition, the switch 51 is switched from ON to OFF by the power source voltage V3 to the drive power source supplying section 52 being cut off. Accordingly, current path from the commercial power source 70 to the voltage phase detecting section 34 is cut off and current no longer flows through the inside of the voltage phase detecting section 34. As such, the voltage phase detecting section 34 is in a state where detecting of the value of the alternating current voltage Vac is not performed.

On the other hand, the application of the power source voltages V2 and V3 from the level shifter 41 to the indoor fan control section 38 and the drive power source supplying section 52 is restarted at a timing when there is a drive command from a user while in the "standby mode". Due to this, the operation for activating the indoor fan motor M22 is started. At the same time, the switch 51 is turned ON since the switch drive power source V sw is applied to the switch 51.

Accordingly, the current path from the commercial power source 70 to the voltage phase detecting section 34 is formed again and current flows to the voltage phase detecting section 34. As such, it is possible for the voltage phase detecting section 34 to detect the phase of the power source voltage (that is, the alternating current voltage Vac) which is applied from the commercial power source 70.

Here, as is understood from the description above, it is necessary to continuously apply a power source voltage to the main control computer 60 since the main control computer 60 performs determining of transiting between modes. In other words, it is necessary for the power source voltage V1 to be applied to the main control computer 60 even during the "standby mode". In accompaniment with this, continuous operations are necessary even during the "standby mode" in a portion which is related to applying the power source voltage V1 of the level shifter 41 and the direct current voltage generating section 31.

### (4) Characteristics

### (4-1)

In the embodiment described above, the main control computer 60 switches the switching section 50 so that current flows through the inside of the voltage phase detecting section 34 during the driving mode where the indoor fan motor M22 which is the actuator is being driven and so that current does not flow through the inside of the voltage phase detecting section 34 during a standby mode where driving of the indoor fan motor M22 is stopped. Due to this, current flows through the inside of the voltage phase detecting section 34 during the driving mode and current no longer flows through the inside of the voltage phase detecting section 34 during the standby mode. As a result, power consumption in the voltage phase detecting section 34 is reduced during the standby mode. Accordingly, it is possible to reduce power consumption in the air conditioner 10.

### (4-2)

In the embodiment described above, the main control computer 60 switches the switching section 50 so that current flows through the inside of the voltage phase detecting section 34 during the driving mode when the detection results from the voltage phase detecting section 34 are necessary in the indoor fan control section 38 which utilizes the detection results from the voltage phase detecting section 34 and so that current does not flow through the inside of the voltage phase detecting section 34 during the standby mode when the detection results from the voltage phase detecting section 34 are not necessary in the indoor fan control section 38. Due to this, current flows through the inside of the voltage phase detecting section 34 during the driving mode when the detection results from the voltage phase detecting section 34 are necessary in the indoor fan control section 38 and current no longer flows through the inside of the voltage phase detecting section 34 during the standby mode when the detection results from the voltage phase detecting section 34 are not necessary in the indoor fan control section 38. As a result, power consumption in the voltage phase detecting section 34 is reduced during the standby mode when the detection results from the voltage phase detecting section 34 are not necessary. Accordingly, it is possible to reduce power consumption in the air conditioner 10.

### (4-3)

In the embodiment described above, the main control computer 60 switches the switching section 50 so that the flow of current through the inside of the voltage phase detecting section 34 is cut off by transiting to the standby mode when a predetermined time period elapses since driving of the indoor fan motor M22 which is the actuator is stopped. Due to this, the flow of current through the inside of the voltage phase detecting section 34 is cut off in a case where it is certain that the flow of current may be cut off. As a result, it is possible to realize stable control of the switching section 50.

### (4-4)

In the embodiment described above, the actuator is the indoor fan motor M22 which is at least one drive source for one of the plurality of devices which are included in the air conditioner 10. Due to this, it is possible to reduce power consumption in the air conditioner 10.

### (4-5)

In the embodiment described above, the voltage phase detecting section 34 detects the phase of the alternating current voltage Vac which is applied from the commercial power source 70. Due to this, power consumption is reduced during the standby mode when detecting of the phase of the alternating current voltage Vac is not necessary in the air conditioner 10 where control of the indoor fan motor M22 which is the actuator is performed based on the phase of the alternating current voltage Vac which is detected.

### (5) Modified Examples

### (5-1) Modified Example 1A

The embodiment described above is described as a case where the motor driving apparatus 30 is used as an apparatus for controlling driving of the indoor fan motor M22 which is the drive source for the indoor fan 22. However, the target for driving by the motor driving apparatus 30 is not limited to the indoor fan motor M22 and may be the outdoor fan motor M16, the compressor motor M12, or the expansion valve 15. In addition the motor driving apparatus 30 may be used as the apparatus for driving a compressor motor, a pump motor, an outdoor fan motor, or the like which is included in a different heat pump apparatus such as a water heater instead of the air conditioner 10.

### (5-2) Modified Example 1B

The embodiment described above is described as a case where the motor driving apparatus 30 controls driving of the indoor fan motor M22 using a rotor position sensorless method. However, without being limited to this, the motor driving apparatus 30 may be an apparatus which is a type where, for example, control is performed with regard to the indoor fan motor M22, which is mounted with a position detection sensor (for example, a hall element) which detects the position of the rotor 22b, based on detection results from the sensor.

In addition, instead of a brushless DC motor, the motor which is the target for driving by the motor driving apparatus 30 may be other types of motors such as an induction motor which is driven by an inverter.

### (5-3) Modified Example 1C

The embodiment described above is described as a case where the voltage command value Vpwm is the command value for specifying the duties of the drive voltages SU, SV, and SW, that is, a case where PWM control of the indoor fan motor M22 is carried out. However, without being limited to the case where PWM control of the indoor fan motor M22 is carried out, the voltage command value Vpwm may be a command value for specifying the frequencies and/or the voltage values of the drive voltages SU, SV, and SW.

### (5-4) Modified Example 1D

The embodiment described above is described as a case where the indoor fan motor M22 is a brushless DC motor and is, in more detail, a SPM motor. However, the type of brushless DC motor according to the present invention is not limited to a SPM motor.

### (5-5) Modified Example 1E

In the embodiment described above, the voltage phase detecting section 34 is configured so that power is supplied due to the voltage phase detecting section 34 being connected with the commercial power source 70 via the switch 51. However, the voltage phase detecting section 34 may be configured so that power is supplied by a power source which is not a commercial power source via the switch 51.

### (5-6) Modified Example 1F

In the embodiment described above, the voltage phase detecting section 34 detects the phase of the alternating current voltage Vac which is applied from the commercial power source 70, and the sensorless control section 40 estimates the value of the direct current voltage Vdc based on the detection results from the voltage phase detecting section 34.

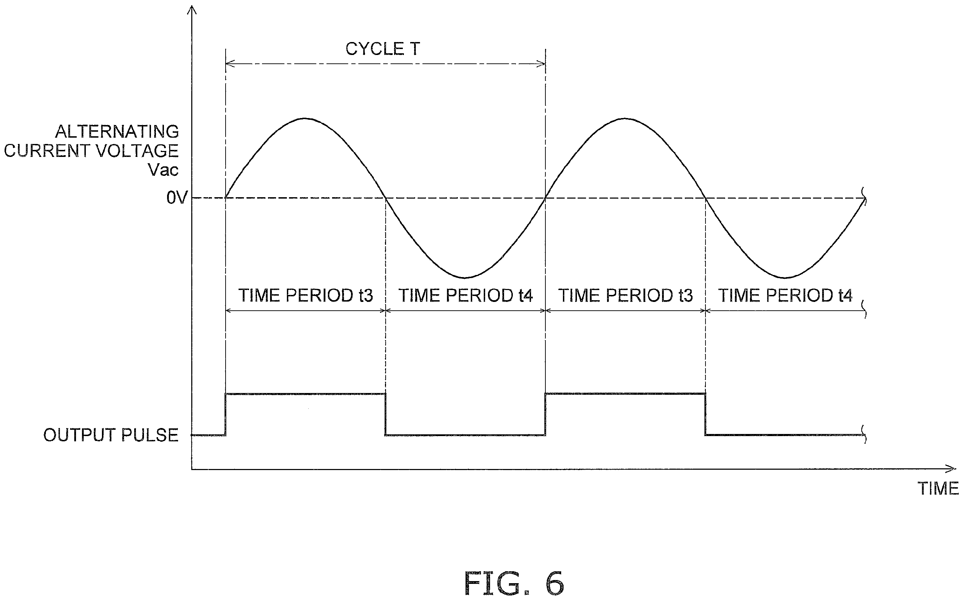

However, without being limited to this, the voltage phase detecting section 34 may, for example, identify the polarity by detecting the zero crossing point of the alternating current voltage Vac. In other words, the voltage phase detecting section 34 may be configured so as to detect changes in the polarity of the alternating current voltage Vac and output a pulse signal based on the changes in polarity. In detail, the voltage phase detecting section 34 may output a pulse signal over a time period t3 which is a period over which the polarity of the alternating current voltage Vac is positive and may perform no generating or outputting of pulse signals over a time period t4 which is a period over which the polarity of the alternating current voltage Vac is negative as shown in Fig. 6. In this case, the time period t3 is a time period from the rise to the fall of the pulse signal which is output from the voltage phase detecting section 34 and is equivalent to the pulse width of the pulse signal.

Then, the sensorless control section 40 may be configured such that the voltage value of the direct current voltage Vdc is estimated by referencing a table, where the corresponding relationship between the pulse width of the pulse signal which is output from the voltage phase detecting section 34 and the voltage value of the direct current voltage Vdc is defined. Here, in this case, there may be a configuration where the pulse signal which is output from the voltage phase detecting section 34 is a LOW output over the time period t3 and is a HIGH output over the time period t4.

Even with the configuration as described above, power consumption in the voltage phase detecting section 34 is reduced when detection of the polarity or zero crossing point of the alternating current voltage Vac is not necessary, and it is possible to reduce power consumption in the air conditioner 10.

### (5-7) Modified Example 1G

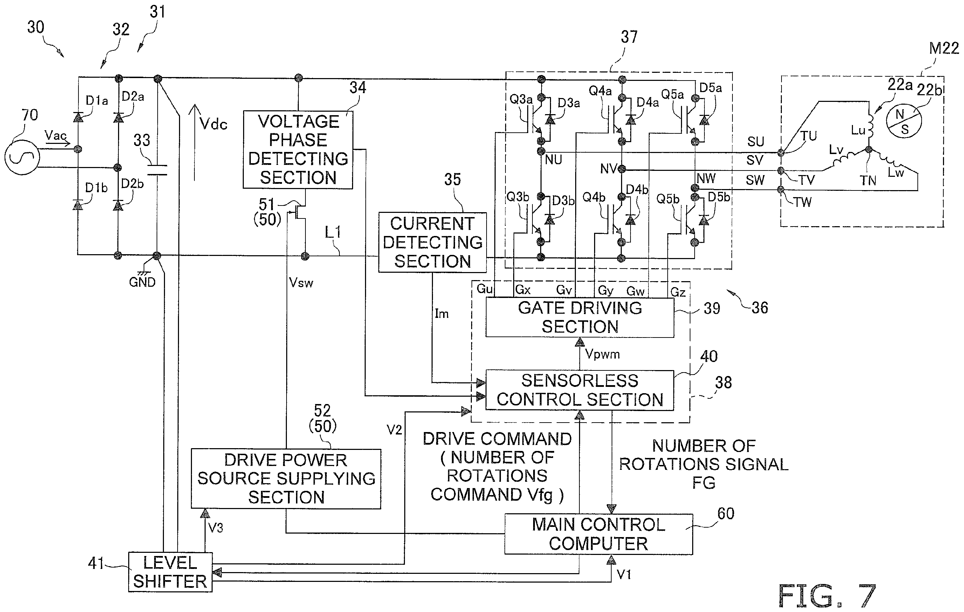

In the embodiment described above, the voltage phase detecting section 34 is connected in parallel with the rectifying section 32 between the commercial power source 70 and the direct current voltage generating section 31. However, without being limited to this, the voltage phase detecting section 34 may be provided so as to be, for example, connected in parallel with the smoothing capacitor 33 between the direct current voltage generating section 31 and the inverter 37 as shown in Fig. 7. In this case, it is possible to realize the effects in the same manner as the embodiment described above by connecting the switching section 50 in series with the voltage phase detecting section 34 in the same manner as the embodiment described above.

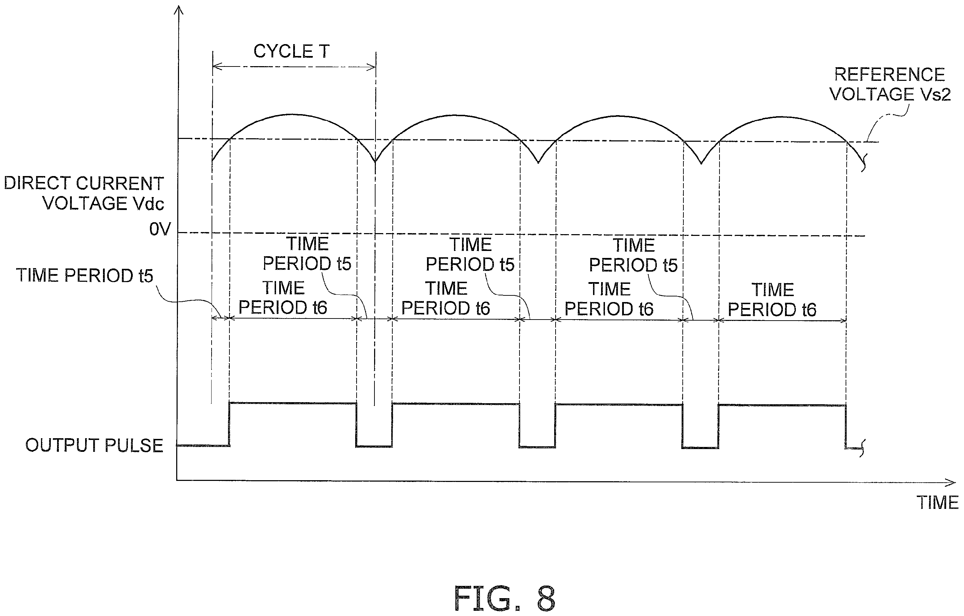

Here, in the embodiment which is shown in Fig. 7, the voltage phase detecting section 34 outputs a pulse signal by detecting the phase of the direct current voltage Vdc. In detail, a reference voltage Vs2 is set in the voltage phase detecting section 34 as a reference when detecting the phase of the direct current voltage Vdc as shown in Fig. 8. Here, the reference voltage Vs2 is set to an appropriate voltage which exceeds 0V. Then, the voltage phase detecting section 34 performs no generating or outputting of pulse signals over a time period t5 which is a period over which the direct current voltage Vdc is lower than the reference voltage Vs2. On the other hand, the voltage phase detecting section 34 generates a pulse signal and outputs the pulse signal to the sensorless control section 40 over a time period t6 which is a period over which the direct current voltage Vdc is higher than the phase detecting reference voltage Vs2. That is, the time period t6 is a time period from the rise to the fall of the pulse signal which is output from the voltage phase detecting section 34 and is equivalent to the pulse width of the pulse signal.

Here, the time period t5 becomes longer as the direct current voltage Vdc is lower and the time period t6 becomes longer as the direct current voltage Vdc is higher. That is, the pulse width of the pulse signal which is output depends on the size of the direct current voltage Vdc. Here, in this case, there may be a configuration where the pulse signal which is output from the voltage phase detecting section 34 is a LOW output over the time period t6 and is a HIGH output over the time period t5.

### (5-8) Modified Example 1H

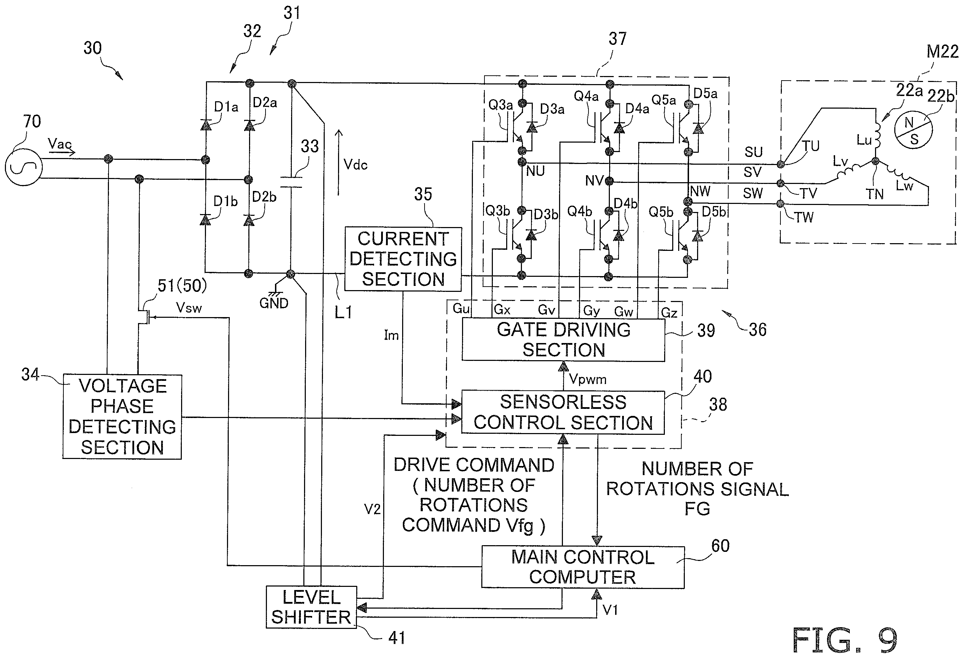

The embodiment described above is described as a case where the switching section 50 has the switch 51 and the drive power source supplying section 52 as shown in Fig. 1. However, the switching section 50 may only have the switch 51 without the drive power source supplying section 52 as shown in Fig. 9. In this case, there may be a configuration where the gate terminal of the switch 51 is connected with the main control computer 60, and ON and OFF of the switch 51 is switched due to a switch control signal which is send by the main control computer 60 being applied as the switch drive power source Vsw.

In addition, there may be a configuration where the switch 51 is turned ON or OFF according to the state of the switch control signal which is sent from the main control computer 60 without the switch 51 being turned ON or OFF according to the application or cutting off of the switch drive power source Vsw even if the switching section 50 has the drive power source supplying section 52.

### (5-9) Modified Example 11

The embodiment described above is described as a case where the switch 51 is configured by a MOSFET. However, the configuration of the switch 51 according to the present invention is not limited to a MOSFET. For example, the switch 51 may be another type of semiconductor switch such as an insulated gate bipolar transistor (IGBT) or a solid state relay, or an electromagnetic relay.

### (5-10) Modified Example 1J

The embodiment described above is described as a case where switching control of the switch 51 is carried out by the main control computer 60. However, without being limited to this, switching control of the switch 51 may be carried out by the indoor fan control section 38. In addition, a switch control section may be newly provided instead of the main control computer 60. In this case, the switch control section is applied the power source voltage from the level shifter 41 and performs switching control of the switch 51. Here, there may be a configuration where the timings with which switching of the switch 51 is performed in this case are the same as the timings which are shown in Fig. 4.

### (5-11) Modified Example 1K

The embodiment described above is described as a case where the mode transits from the standby determining mode to the standby mode after a predetermined time period elapses in a case where there is a driving stop command as shown in Fig. 4. However, without being limited to this, the standby determining mode may be omitted. That is, at a timing when a driving stop command is input, the mode may directly transit from the driving mode to the standby mode and the switch 51 may be switched from ON to OFF.

In addition, the embodiment described above is described as a case where the mode transits from the "standby mode" to the "driving mode" and the switch 51 is switched from OFF to ON at a timing when there is a drive command. However, there may be a configuration where the mode transit from the "standby mode" to the "driving mode" and the switch 51 is switched from OFF to ON at a timing when a predetermined time period elapses since the driving command has been input.

### (5-12) Modified Example 1L

In the embodiment described above, whether or not supply of power to the outdoor unit 11 is cut off during the standby mode is not referred to, but it is obvious that supply of power from the commercial power source 70 to the outdoor unit 11 may be cut off by a main power source relay or switch (which is not shown in the diagrams) between the outdoor unit 11 and the commercial power source 70 which is the drive power source for the outdoor unit 11 being turned OFF during the standby mode. Due to this, it is possible to restrain the amount of power which is consumed in the outdoor unit 11 during the standby mode.

### (5-13) Modified Example 1M

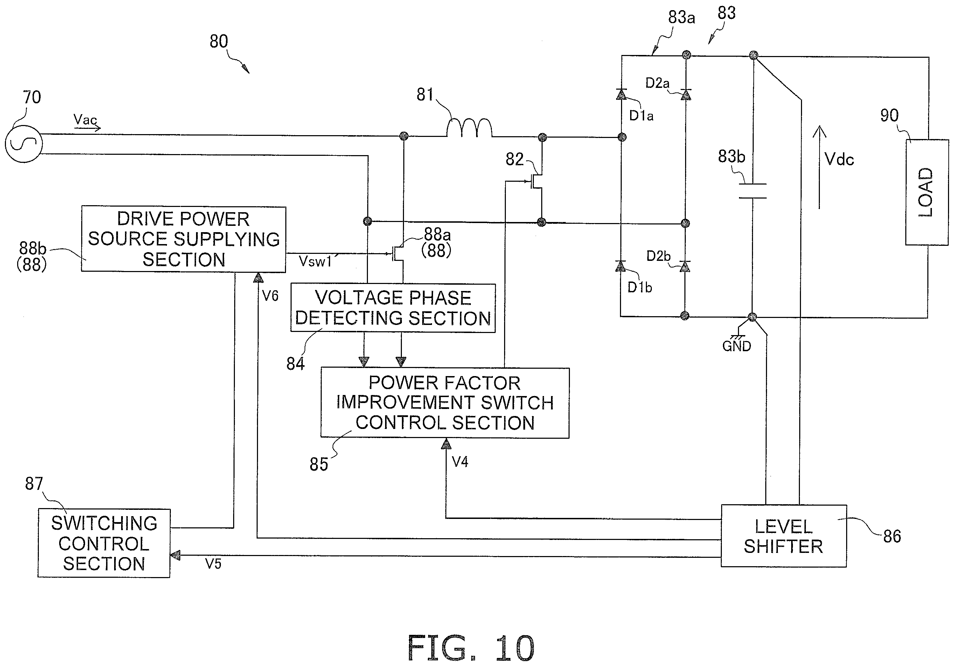

In the embodiment described above, the power consumption reducing apparatus according to the present invention is applied to the motor driving apparatus 30 which is an actuator driving apparatus, but it is possible to apply the power consumption reducing apparatus to an apparatus which is not an actuator driving apparatus. For example, it is possible to apply the power consumption reducing apparatus to a direct current power source apparatus 80 where power is always consumed due to the phase of the power source voltage which is applied from the commercial power source 70 being always detected as shown in Fig. 10. The direct current power source apparatus 80 which is shown in Fig. 10 will be described below.

The direct current power source apparatus 80 is an apparatus which converts the alternating current voltage Vac which is applied from the commercial power source 70 to the direct current voltage Vdc. The direct current power source apparatus 80 is mainly configured from a reactor 81, a power factor improvement switch 82, a direct current voltage generating section 83, a voltage phase detecting section 84, a power factor improvement switch control section 85, a level shifter 86, a switching control section 87, and a switching section 88. The direct current power source apparatus 80 is electrically connected with the commercial power source 70 and a load 90. It is assumed that the load 90 is an inverter circuit, a motor, or the like but is not limited to this and appropriate selections are possible.

Here, the direct current voltage generating section 83 is configured from a rectifying section 83a and a smoothing capacitor 83b but the description is omitted because the configuration is the same as the direct current voltage generating section 31. In addition, the description of the voltage phase detecting section 84 is omitted because the configuration is the same as the voltage phase detecting section 34. In addition, the switching section 88 is mainly configured from a switch 88a and a drive power source supplying section 88b but the description is omitted because the configuration is the same as the switching section 50.

The reactor 81 is provided between the commercial power source 70 and the alternating current input terminal of the direct current voltage generating section 83. The power factor improvement switch 82 is a switch for short circuiting the commercial power source 70. The power factor improvement switch 82 is represented in Fig. 10 using a single element but is configured by, for example, a combination of a diode bridge and a semiconductor switch such as a MOSFET or an IGBT in order for current to flow in both directions in practice. The direct current voltage generating section 83 rectifies current which flows due to the alternating current voltage Vac from the commercial power source 70 and short-circuit and opening operations of the power factor improvement switch 82 and supplies the current to the load 90.

The voltage phase detecting section 84 is connected with both sides of the commercial power source 70 via the switch 88a and is provided in parallel with the power factor improvement switch 82 between the commercial power source 70 and the reactor 81. In addition, the voltage phase detecting section 84 is connected with the input port of the power factor improvement switch control section 85 which is a microcomputer. The voltage phase detecting section 84 outputs a pulse signal to the power factor improvement switch control section 85 by detecting the zero crossing point of the alternating current voltage Vac using the method as shown in Fig. 6 described above.

The power factor improvement switch control section 85 repeats short circuiting and opening of the power factor improvement switch 82, for example, once per half cycle of the power source by generating a drive signal which drives the power factor improvement switch 82 after correcting a timing with regard to the pulse signal which is output from the voltage phase detecting section 84. In detail, the power factor improvement switch control section 85 controls the power factor improvement switch 82 so as to be short circuited after a predetermined time period from the zero crossing point and so as to be open after a predetermined time period after this. That is, the direct current power source apparatus 80 restrains variation due to a photo coupler in a case where the phase of a voltage from an alternating current power source is detected, that is, variation in the power factor, by correcting the timing with which the power factor improvement switch 82 is short circuited or opened according to the pulse width of the pulse signal which is output from the voltage phase detecting section 84.

The level shifter 86 is connected in parallel with regard to the smoothing capacitor 83b, and a voltage (that is, the direct current voltage Vdc) is applied to both ends of the smoothing capacitor 83b. The output of the level shifter 86 is connected with the power factor improvement switch control section 85, the drive power source supplying section 88b, and the switching control section 87.

The level shifter 86 converts the direct current voltage Vdc which is applied to three predetermined voltages V4, V5, and V6. The level shifter 86 respectively applies the predetermined voltages V4, V5, and V6 after conversion to the power factor improvement switch control section 85, the switching control section 87, and the drive power source supplying section 88b as the power source voltage.

That is, the level shifter 86 functions as the power source for the power factor improvement switch control section 85, the drive power source supplying section 88b, and the switching control section 87. As one example, the level shifter 86 converts the direct current voltage Vdc to the voltages V4 and V6 which are 3V and the voltage V5 which is 5V and with the direct current voltage Vdc as 140V The voltages V4 and V6 which are 3V are the power source voltages which are applied to the power factor improvement switch control section 85 and the switching control section 87. The voltage V5 which is 5V is the power source voltage which is applied to the drive power source supplying section 88b.

The switching control section 87 is a microcomputer which consists of a RAM, a ROM, and a CPU. The switching control section 87 is applied with the power source voltage V5 from the level shifter 86. The switching control section 87 is connected with a remote controller or the like which is not shown in the diagrams along with the switching section 88. In addition the switching control section 87 receives a command from a user via the remote controller, and performs control of the switching section 88 by causing the drive power source supplying section 88b to perform supplying or cutting off a switch drive power source Vsw1' with regard to the switch 88a

The switching section 88 is connected in series with the voltage phase detecting section 84. Due to the switching section 88 being provided in this manner, it is possible to cut off the flow of current to the voltage phase detecting section 84 in the direct current power source apparatus 80.

The input of the drive power source supplying section 88b is connected with the switching control section 87 and the level shifter 86. In addition, the output of the drive power source supplying section 88b is connected with the gate terminal of the switch 88a. The drive power source supplying section 88b is applied with the predetermined voltage V6 The drive power source supplying section 88b is applied with the predetermined voltage V6 from the level shifter 86. The drive power source supplying section 88b generates the switch drive power source Vsw1' for the switch 88a according to a command from the switching control section 87 and outputs the switch drive power source Vsw1' to the switch 88a. That is, the operations of the switch 88a being turned ON and OFF is controlled by the switching control section 87.

In detail, the drive power source supplying section 88b turns the switch 88a ON by supplying the switch drive power source Vsw1' which is, for example, 5V to the switch 88a so that current flows through the voltage phase detecting section 84. In addition, the drive power source supplying section 88b turns the switch 88a OFF by cutting the supply of the switch drive power source Vsw1' to the switch 88a so that current does not flow through the voltage phase detecting section 84.

In the direct current power source apparatus 80 which is shown in Fig. 10, the power factor improvement switch control section 85 controls ON and OFF of the power factor improvement switch 82 based on the output from the voltage phase detecting section 84. In other words, the power factor improvement switch control section 85 utilizes the detection results from the voltage phase detecting section 84. Here, control by the power factor improvement switch control section 85 is executed in a case where the load 90 is in operation. As such, the detection results from the voltage phase detecting section 84 are necessary and the switching control section 87 controls the switching section 88 so that the switch 88a is ON in a case where the load 90 is in operation. On the other hand, control by the power factor improvement switch control section 85 is not executed in a case where the load 90 is not in operation. As such, the detection results from the voltage phase detecting section 84 are not necessary and the switching control section 87 controls the switching section 88 so that the switch 88a is OFF in a case where the load 90 is not in operation.

That is, in the direct current power source apparatus 80, the switching control section 87 switches the switching section 88 so that current flows through the inside of the voltage phase detecting section 84 when the detection results are necessary in the power factor improvement switch control section 85 which utilizes the detection results from the voltage phase detecting section 84 and so that current does not flow through the inside of the voltage phase detecting section 84 when the detection results are not necessary in the power factor improvement switch control section 85. Due to this, current flows through the inside of the voltage phase detecting section 84 when the detection results from the voltage phase detecting section 84 are necessary and current no longer flows through the inside of the voltage phase detecting section 84 when the detection results from the voltage phase detecting section 84 are not necessary. As a result, power consumption is reduced when the detection results from the voltage phase detecting section 84 are not necessary. Accordingly, it is possible to reduce power consumption in the direct current power source apparatus 80.

In addition, since it is possible for the power source frequency to be detected from the pulse width of the pulse signal, it is possible for control to be performed using the power source frequency and for counting using a timer to be performed.

### INDUSTRIAL APPLICABILITY

It is possible for the present invention to be utilized in actuator driving apparatuses, direct current power source apparatuses, and the like in, for example, air conditioners.

### REFERENCE SIGNS LIST

- 10: AIR CONDITIONER
- M22: INDOOR FAN MOTOR
- 30: MOTOR DRIVING APPARATUS
- 31, 83: DIRECT CURRENT VOLTAGE GENERATING SECTION
- 34, 84: VOLTAGE PHASE DETECTING SECTION
- 35: CURRENT DETECTING SECTION
- 36: DRIVE VOLTAGE GENERATING SECTION
- 37: INVERTER
- 38: INDOOR FAN CONTROL SECTION
- 39: GATE DRIVING SECTION
- 40: SENSORLESS CONTROL SECTION
- 41, 86: LEVEL SHIFTER
- 50, 88: SWITCHING SECTION
- 51, 88a: SWITCH
- 52, 88b: DRIVE POWER SOURCE SUPPLYING SECTION
- 60: MAIN CONTRL COMPUTER
- 70: COMMERCIAL POWER SOURCE
- 80: DIRECT CURRENT POWER SOURCE APPARATUS
- 81: REACTOR
- 82: POWER FACTOR IMPROVEMENT SWITCH
- 85: POWER FACTOR IMPROVEMENT SWITCH CONTROL SECTION
- 87: SWITCHING CONTROL SECTION
- 90: LOAD

### CITATION LIST

### <Patent Literature>

Patent Document 1: Japanese Laid-open Patent Publication No. 2012-125018

## Claims

1. A power consumption reducing apparatus (30) comprising:
a voltage characteristics detecting section (34) which is electrically connected with a power source (70) and detects the characteristics of a voltage (Vac, Vdc) applied from the power source (70) due to current flowing through inside of the voltage characteristics detecting section (34);
a drive signal generating section (36) configured to generate a drive signal (SU, SV, SW) for driving an actuator (M22) based on the detection results from the voltage characteristics detecting section (34);
a switch section (50) which is connected in series with the voltage characteristics detecting section (34) between the power source (70) and the voltage characteristics detecting section (34) and is configured and arranged to be able to cut off the flow of current through the inside of the voltage characteristics detecting section (34); and
a switch control section (60) configured to control switching of the switch section (34); wherein the switch control section (60) is configured to switch the switch section (50) so that current flows through the inside of the voltage characteristics detecting section (34) during a driving mode where the actuator (M22) is being driven and so that current does not flow through the inside of the voltage characteristics detecting section (30) during a standby mode where driving of the actuator (M22) is stopped.

2. A power consumption reducing apparatus (80) connected to a load (90) comprising:
a voltage phase detecting section (84) which is electrically connected with a power source (70) and which detects the zero crossing point of a voltage (Vac) applied from the power source (70);
a power factor improvement switch control section (85) conf igured to open a power factor improvement switch (82) after a predetermined time period from the zero crossing point of the voltage and to open the power factor improvement switch (82) after a predetermined time period after the short circuit thereof [page 28, 1. 17 to 24];
a switch section (88) which is connected in series with the voltage phase detecting section (84) between the power source (70) and the voltage phase detecting section (84) and is configured to cut off the flow of current through the inside of the voltage phase detecting section (84); and
a switch control section (87) configured to control the switching of the switch section (88);
wherein the switch control section (87) is configured to switch the switch section (88) so that current flows through the inside of the voltage phase detecting section (84) when voltage phase detection results are necessary in the power factor improvement switch control section (85) in a case where the load is in operation and so that current does not flow through the inside of the voltage phase detecting section (84) when voltage phase detection results are not necessary in the power factor improvement switch control section (85) in a case where the load is not in operation.

3. The power consumption reducing apparatus according to claim 1, wherein
the switch control section (60) switches the switch section (88) so that the flow of current through the inside of the voltage characteristics detecting section (34) is cut off when a predetermined time period elapses since driving of the actuator (M22) is stopped.

4. The power consumption reducing apparatus according to claim 1 or 3 further comprising:
an integral control section (60) which integrally controls a plurality of devices included in an air conditioner, and which includes the switch control section (60);
wherein the actuator (M22) is a motor which is at least one drive source for the plurality of devices included in the air conditioner (10);
the drive signal generating section (36) includes a determining section (38) which determines the drive signal utilizing the detection results from the voltage characteristics detecting section (34) and an output section (37) which generates the drive signal determined by the determining section (38) and outputs the drive signal to the actuator (M22).

5. The power consumption reducing apparatus according to any one of claims 1, 3, or 4, wherein
the voltage characteristics detecting section (34) detects the phase of the voltage applied from the power source (70).

6. The power consumption reducing apparatus according to any one of claims 1, 3, or 4, wherein
the voltage characteristics detecting section (34) detects the polarity of the voltage applied from the power source (70).

7. The power consumption reducing apparatus according to any one of claims 1, 3, or 4, wherein
the voltage characteristics detecting section (34) detects the zero crossing point of the voltage applied from the power source (70).

## Patentansprüche

1. Leistungsverbrauchsreduzierungsvorrichtung (30), umfassend:
einen Spannungscharakteristik-Erkennungsabschnitt (34), der mit einer Leistungsquelle (70) elektrisch verbunden ist und die Charakteristik einer von der Leistungsquelle (70) angelegten Spannung (Vac, Vdc) aufgrund eines Stroms, der durch das Innere des Spannungscharakteristik-Erkennungsabschnitts (34) fließt, erkennt;
einen Antriebssignal-Erzeugungsabschnitt (36), der dazu ausgebildet ist, ein Antriebssignal (SU, SV, SW) zum Antreiben eines Aktors (M22) basierend auf den Erkennungsergebnissen von dem Spannungscharakteristik-Erkennungssabschnitt (34) zu erzeugen;
einen Schaltabschnitt (50), der zwischen der Leistungsquelle (70) und dem Spannungscharakteristik-Erkennungsabschnitt (34) mit dem Spannungscharakteristik-Erkennungsabschnitt (34) in Reihe geschaltet ist und dazu ausgebildet und eingerichtet ist, in der Lage zu sein, den Stromfluss durch das Innere des Spannungscharakteristik-Erkennungsabschnitts (34) zu unterbrechen; und
einen Schaltsteuerabschnitt (60), der dazu ausgebildet ist, ein Schalten des Schaltabschnitts (34) zu steuern; wobei
der Schaltsteuerabschnitt (60) dazu ausgebildet ist, den Schaltabschnitt (50) so zu schalten, dass während eines Antriebsmodus, in dem der Aktor (M22) angetrieben wird, Strom durch das Innere des Spannungscharakteristik-Erkennungsabschnitts (34) fließt, und dass während eines Stand-by-Modus, in dem ein Antreiben des Aktors (M22) gestoppt ist, kein Strom durch das Innere des Spannungscharakteristik-Erkennungsabschnitts (30) fließt.

2. Leistungsverbrauchsreduzierungsvorrichtung (80), die mit einer Last (90) verbunden ist, umfassend:
einen Spannungsphasenerkennungsabschnitt (84), der mit einer Leistungsquelle (70) elektrisch verbunden ist und der den Nulldurchgang einer von der Leistungsquelle (70) angelegten Spannung (Vac) erkennt;
einen Leistungsfaktorverbesserungsschalter-Steuerabschnitt (85), der dazu ausgebildet ist, einen Leistungsfaktorverbesserungsschalter (82) nach einer vorbestimmten Zeitdauer ab dem Nulldurchgang der Spannung zu öffnen und den Leistungsfaktorverbesserungsschalter (82) nach einer vorbestimmten Zeitdauer nach dem Kurzschluss desselben [Seite 28, 1.17 bis 24] zu öffnen;
einen Schaltabschnitt (88), der zwischen der Leistungsquelle (70) und dem Spannungsphasenerkennungsabschnitt (84) mit dem Spannungsphasenerkennungsabschnitt (84) in Reihe geschaltet ist und dazu ausgebildet ist, den Stromfluss durch das Innere des Spannungsphasenerkennungsabschnitts (84) zu unterbrechen; und
einen Schaltsteuerabschnitt (87), der dazu ausgebildet ist, das Schalten des Schaltabschnitts (88) zu steuern;
wobei der Schaltsteuerabschnitt (87) dazu ausgebildet ist, den Schaltabschnitt (88) so zu schalten, dass Strom durch das Innere des Spannungsphasenerkennungsabschnitts (84) fließt, wenn in einem Fall, in dem die Last in Betrieb ist, Spannungsphasenerkennungsergebnisse in dem Leistungsfaktorverbesserungsschalter-Steuerabschnitt (85) notwendig sind, und so zu schalten, dass kein Strom durch das Innere des Spannungsphasenerkennungsabschnitts (84) fließt, wenn in einem Fall, in dem die Last nicht in Betrieb ist, keine Spannungsphasenerkennungsergebnisse in dem Leistungsfaktorverbesserungsschalter-Steuerabschnitt (85) notwendig sind.

3. Leistungsverbrauchsreduzierungsvorrichtung nach Anspruch 1, wobei der Schaltsteuerabschnitt (60) den Schaltabschnitt (88) so schaltet, dass der Stromfluss durch das Innere des Spannungscharakteristik-Erkennungsabschnitts (34) unterbrochen wird, wenn eine vorbestimmte Zeitdauer verstreicht, da ein Antreiben des Aktors (M22) gestoppt ist.

4. Leistungsverbrauchsreduzierungsvorrichtung nach Anspruch 1 oder 3, ferner umfassend:
einen Integrale-Steuerung-Abschnitt (60), der eine Mehrzahl von Geräten, die in einer Klimaanlage enthalten sind, integral steuert, und der den Schaltsteuerabschnitt (60) umfasst;
wobei der Aktor (M22) ein Motor ist, der zumindest eine Antriebsquelle für die Mehrzahl von in der Klimaanlage (10) enthaltenen Geräten ist;
der Antriebssignalerzeugungsabschnitt (36) einen Bestimmungsabschnitt (38), der das Antriebssignal unter Verwendung der Erkennungsergebnisse von dem Spannungscharakteristik-Erkennungsabschnitt (34) bestimmt, und einen Ausgabeabschnitt (37), der das durch den Bestimmungsabschnitt (38) bestimmte Antriebssignal erzeugt und das Antriebssignal an den Aktor (M22) ausgibt, umfasst.

5. Leistungsverbrauchsreduzierungsvorrichtung nach einem der Ansprüche 1, 3 oder 4, wobei
der Spannungscharakteristik-Erkennungsabschnitt (34) die Phase der von der Leistungsquelle (70) angelegten Spannung erkennt.

6. Leistungsverbrauchsreduzierungsvorrichtung nach einem der Ansprüche 1, 3 oder 4, wobei
der Spannungscharakteristik-Erkennungsabschnitt (34) die Polarität der von der Leistungsquelle (70) angelegten Spannung erkennt.

7. Leistungsverbrauchsreduzierungsvorrichtung nach einem der Ansprüche 1, 3 oder 4, wobei
der Spannungscharakteristik-Erkennungsabschnitt (34) den Nulldurchgang der von der Leistungsquelle (70) angelegten Spannung erkennt.

## Revendications

1. Appareil de réduction de consommation d'énergie électrique (30) comprenant :
une section de détection de caractéristiques de tension (34) qui est connectée électriquement à une source d'énergie électrique (70) et détecte les caractéristiques d'une tension (Vac, Vdc) appliquée à partir de la source d'énergie électrique (70) en raison du passage d'un courant à travers l'intérieur de la section de détection de caractéristiques de tension (34) ;
une section de génération de signal d'entraînement (36) configurée pour générer un signal d'entraînement (SU, SV, SW) pour entraîner un actionneur (M22) sur la base des résultats de détection à partir de la section de détection de caractéristiques de tension (34) ;
une section de commutateur (50) qui est connectée en série à la section de détection de caractéristiques de tension (34) entre la source d'énergie électrique (70) et la section de détection de caractéristiques de tension (34) et est configurée et agencée pour être capable de couper le passage du courant à travers l'intérieur de la section de détection de caractéristiques de tension (34) ; et
une section de commande de commutateur (60) configurée pour commander une commutation de la section de commutateur (34) ;
dans lequel
la section de commande de commutateur (60) est configurée pour commuter la section de commutateur (50) pour que le courant passe à travers l'intérieur de la section de détection de caractéristiques de tension (34) durant un mode d'entraînement où l'actionneur (M22) est entraîné et pour que le courant ne passe pas à travers l'intérieur de la section de détection de caractéristiques de tension (30) durant un mode d'attente où l'entraînement de l'actionneur (M22) est arrêté.

2. Appareil de réduction de consommation d'énergie électrique (80) connecté à une charge (90) comprenant :
une section de détection de phase de tension (84) qui est connectée électriquement à une source d'énergie électrique (70) et qui détecte le point de passage à zéro d'une tension (Vac) appliquée à partir de la source d'énergie électrique (70) ;
une section de commande de commutateur d'amélioration de facteur de puissance (85) configurée pour ouvrir un commutateur d'amélioration de facteur de puissance (82) après une période prédéterminée à partir du point de passage à zéro de la tension et pour ouvrir le commutateur d'amélioration de facteur de puissance (82) après une période prédéterminée après le court-circuit de celui-ci [page 28, 1.17 à 24] ;
une section de commutateur (88) qui est connectée en série à la section de détection de phase de tension (84) entre la source d'énergie électrique (70) et la section de détection de phase de tension (84) et est configurée pour couper le passage de courant à travers l'intérieur de la section de détection de phase de tension (84) ; et
une section de commande de commutateur (87) configurée pour commander la commutation de la section de commutateur (88) ;
dans lequel la section de commande de commutateur (87) est configurée pour commuter la section de commutateur (88) pour que le courant passe à travers l'intérieur de la section de détection de phase de tension (84) lorsque des résultats de détection de phase de tension sont nécessaires dans la section de commande de commutateur d'amélioration de facteur de puissance (85) au cas où la charge est en fonctionnement et pour que le courant ne passe pas à travers l'intérieur de la section de détection de phase de tension (84) lorsque des résultats de détection de phase de tension ne sont pas nécessaires dans la section de commande de commutateur d'amélioration de facteur de puissance (85) au cas où la charge n'est pas en fonctionnement.

3. Appareil de réduction de consommation d'énergie électrique selon la revendication 1, dans lequel
la section de commande de commutateur (60) commute la section de commutateur (88) pour que le passage de courant à travers l'intérieur de la section de détection de caractéristiques de tension (34) soit coupé lorsqu'une période prédéterminée expire depuis que l'entraînement de l'actionneur (M22) est arrêté.

4. Appareil de réduction de consommation d'énergie électrique selon la revendication 1 ou 3 comprenant en outre :
une section de commande intégrale (60) qui commande intégralement une pluralité de dispositifs inclus dans un climatiseur, et qui inclut la section de commande de commutateur (60) ;
dans lequel l'actionneur (M22) est un moteur qui est au moins une source d'entraînement pour la pluralité de dispositifs inclus dans the climatiseur (10) ;
la section de génération de signal d'entraînement (36) inclut une section de détermination (38) qui détermine le signal d'entraînement en utilisant les résultats de détection à partir de la section de détection de caractéristiques de tension (34) et une section de sortie (37) qui génère le signal d'entraînement déterminé par la section de détermination (38) et envoie le signal d'entraînement à l'actionneur (M22).

5. Appareil de réduction de consommation d'énergie électrique selon l'une quelconque des revendications 1, 3, ou 4, dans lequel
la section de détection de caractéristiques de tension (34) détecte la phase de la tension appliquée à partir de la source d'énergie électrique (70).

6. Appareil de réduction de consommation d'énergie électrique selon l'une quelconque des revendications 1, 3, ou 4, dans lequel
la section de détection de caractéristiques de tension (34) détecte la polarité de la tension appliquée à partir de la source d'énergie électrique (70).

7. Appareil de réduction de consommation d'énergie électrique selon l'une quelconque des revendications 1, 3, ou 4, dans lequel
la section de détection de caractéristiques de tension (34) détecte le point de passage à zéro de la tension appliquée à partir de la source d'énergie électrique (70).
